# FASCICULE DE BREVET EUROPEEN

(11) **EP 3 524 835 B1**
(45) Date de publication et mention de la délivrance du brevet: **07.04.2021**
(21) Numéro de dépôt: 19156519.1
(22) Date de dépôt: 11.02.2019
(51) Int. Cl.: F16C 11/04, F16C 29/00

(54) **DISPOSITIF DE SUPPORT ET GUIDAGE POUR CHARIOTS PORTEURS DE CHARGES TELLES QUE DES ROBOTS**
TRAG - UND FÜHREINRICHTUNG FÜR LASTTRAGENDEN WAGEN WIE ROBOTS
SUPPORT AND GUIDING ASSEMBLY FOR LOAD CARRIER AS ROBOTS

(30) Priorité: 09.02.2018 FR 1870143
(43) Date de publication de la demande: 14.08.2019
(73) Titulaire: Lucas France, 33430 Bazas (FR)
(72) Inventeur: LUCAS, Jean-Jacques, 33124 AUROS (FR); LAURENT, Christophe, 33840 LERM-ET-MUSSET (FR)
(74) Mandataire: Aquinov

(56) Documents cités:
- DE-A1- 19 543 932
- DE-A1-102005 026 958
- DE-C1- 4 032 820
- US-A- 4 637 738
- US-A- 5 273 366

## Description

L'invention concerne un dispositif de support et guidage de chariot(s) ou plateau(x) guidé(s) destinés à être mobile(s), pour notamment convoyer au moins un robot chargé sur le ou les chariots/plateaux.

Dans de nombreuses applications de production automatisée ou semi-automatisée, un robot doit être apte à se déplacer, notamment le long d'au moins un rail de guidage, voire le long de deux rails parallèles. Le robot est porté par un chariot mobile motorisé qui est fixé sur un dispositif de support comportant au moins un bloc de support et guidage, ledit bloc comprenant au moins une platine de fixation pour fixer le chariot, et un patin de guidage solidaire de la platine de fixation et doté de moyens de guidage tels qu'une glissière apte à coopérer avec un rail le long duquel coulissera le patin; le patin de guidage peut être à guidage par un roulement linéaire à billes.

Les patins des blocs de guidage s'usent au cours du temps et doivent parfois être changés relativement souvent du fait d'une usure très localisée qui se produit en raison de lourdes charges que portent le ou les blocs de support et guidage, charges parfois agencées en outre en porte-à-faux, combiné à la mobilité desdits blocs sur des rails dont le plan d'appui n'est pas forcément de niveau malgré la grande précision de l'ensemble.

La demande de brevet DE102005026958 décrit un bloc d'entraînement de guidage sur rail, comprenant une structure de fixation et permettant de faire reposer le bloc sur le rail avec au moins un degré de liberté en pivotement de la structure de fixation. Un tel bloc utilise un système aéraulique pour l'entraînement. Ce type de bloc d'entraînement par aéraulique nécessitant une alimentation en gaz (air par exemple) n'est pas celui recherché lorsqu'il s'agit de proposer des solutions aisées de fabrication, simples de mise en œuvre et fiables mécaniquement dans le temps avec une facilité d'entretien.

L'invention a donc pour but de proposer un dispositif de support et guidage qui ne présente pas les inconvénients de l'art antérieur et permet notamment de limiter l'usure des blocs de support et guidage et de faciliter le changement du patin de guidage aisément.

Selon l'invention, le dispositif de support et guidage comporte au moins un bloc de support et guidage qui comprend une structure de fixation destinée à la fixation d'au moins un plateau (pour former un ensemble/un chariot mobile) apte à porter une charge telle qu'un robot, et au moins un patin de guidage qui est solidaire de la structure de fixation et est destiné à coopérer avec un rail de guidage pour le déplacement du bloc de support et guidage (via des moyens de guidage du type glissière) ; le dispositif est caractérisé selon la revendication 1.

Par conséquent, en disposant des moyens de compensation qui autorisent au moins un degré de liberté en pivotement de la structure de fixation, le dispositif permet de compenser des variations (jeux) de hauteur et des variations d'inclinaison angulaire par rapport à l'horizontal, que subit le dispositif en cours d'utilisation, liés à différents défauts tels qu'une répartition non optimisée de la charge (c'est-à-dire du robot) portée par le chariot mobile et soutenu par un ou des blocs de support et guidage de l'invention, et/ou des défauts de planéité des rails de guidage sur lesquels circule le dispositif. Les défauts géométriques peuvent résulter aussi bien d'un montage et/ou réglage de niveau qui n'est pas réalisé dans les règles de l'art ou consécutifs à des déformations de la structure de fixation des rails (flexion, torsion) induits par le passage et l'action de la charge dans le cas de grandes portées entre supports (exemple d'un rail sur poteaux) .Le dispositif de l'invention permet au final de limiter grandement les usures localisées du ou des blocs de support et guidage, en particulier des patins et également des billes lorsque les patins de guidage coopèrent avec les rails via des roulements à billes ; ces moyens de compensation procurent une zone d'interface/ zone tampon entre la structure porteuse de fixation de la charge et le patin qui sera directement en interaction avec un rail. Par voie de conséquence le rail est ainsi préservé de toute usure prématurée générée par l'usure de billes, l'usure se caractérisant notamment par un écaillage du revêtement chromé desdites billes. L'invention permet ainsi d'accepter les contraintes de pression élevée pour lesquelles les billes d'interface entre le rail et patin sont conçues.

En outre, pour les chariots équipés de plus d'un bloc de guidage possédant chacun ses moyens de compensation associés, la répartition de charge entre les blocs de guidage est nettement améliorée de sorte à avoir une pression homogène qui s'exerce à l'intérieur des blocs de guidage et également au niveau de la surface de contact entre ces derniers et le rail. Il résulte de cette baisse de charge une longévité accrue et l'absence de marques sur le rail.

Selon une caractéristique, les moyens de compensation sont associés à la structure de fixation de sorte que ladite structure de fixation repose sur lesdits moyens de compensation.

Selon l'invention, le bloc de support comporte au moins un élément à fonction élastique, tel qu'une rondelle à ressort ou en élastomère. Cet élément élastique est en particulier agencé dans la structure de fixation à l'opposé des moyens de compensation et à proximité du plateau destiné à être fixé à la surface de fixation lors de l'utilisation du bloc de support et de guidage. Le bloc de guidage comporte des moyens de fixation de la structure de fixation sur le patin, ces moyens de fixation comportant au moins un élément élastique. En particulier ces moyens de fixation comportent au moins un élément élastique et une vis de fixation qui traverse la structure de fixation et coopère avec le patin ou une platine de fixation montée sur le patin, de préférence via un axe creux autour duquel sont agencés les moyens de compensation.

Ainsi, dans un mode de réalisation préféré, le dispositif de support et guidage comporte au moins un bloc de support et guidage qui comprend une structure de fixation destinée à la fixation d'un plateau, et au moins un patin de guidage solidaire de la structure de fixation, le bloc de support et guidage comportant des moyens dits de compensation contre lesquels s'applique la structure de fixation par l'une de ses surfaces de sorte à autoriser le pivotement de ladite structure de fixation selon au moins un degré de liberté, le dispositif étant caractérisé en ce que le bloc de support comporte au moins un élément à fonction élastique, tel qu'une rondelle à ressort ou en élastomère, qui est agencé dans la structure de fixation à l'opposé des moyens de compensation et à proximité du plateau destiné à être fixé. L'élément à fonction élastique repose contre une surface de la structure de fixation en étant séparé des moyens de compensation par le corps de ladite structure de fixation. L'élément à fonction élastique est indépendant des moyens de compensation. L'élément à fonction élastique est distant des moyens de compensation. L'élément à fonction élastique repose sur une surface de la structure de fixation, qui est opposée à la surface de la structure apte à s'appliquer contre les moyens de compensation. L'élément à fonction élastique est tourné vers le plateau qui est destiné à être fixé sur ladite structure de fixation.

Cet élément élastique agit comme une pré-charge tarée, et si les efforts transmis à partir du plateau venaient à dépasser la valeur de cette pré-charge alors le dispositif de l'invention serait en mesure d'assurer un amortissement de la surcharge engendrée sur le bloc de guidage, préservant ainsi sa longévité. En particulier, en cas de défaut ponctuel de planéité du plan d'accueil des rails, un ou certains patins peuvent alors « s'affaisser » en certains endroits ; l'élément élastique d'un bloc permet de procurer un jeu vertical et permet ponctuellement en l'endroit d'affaissement, de déconnecter la charge que supporte le plateau et donc la surface de fixation, des moyens de compensation et donc du patin, la charge étant alors suffisamment portée par les autres patins. Ceci évite aux moyens de compensation et au(x) patin(s) « affaissés » d'assumer une traction de la charge, qui engendrerait sinon une usure trop rapide desdits patins. En résumé, le dispositif de l'invention permet d'écrêter tous les pics d'efforts vus par le bloc de guidage, quelle que soit leur cause, et sans ajouter de souplesse mécanique dans leur attachement au chariot, par la présence de l'élément élastique en son sein.

Avantageusement, les moyens de compensation comportent au moins un élément à surface sphérique, en particulier au moins un élément tronconique dont la génératrice est à surface convexe.

Les moyens de compensation ont une fonction de rotule. Ils permettent de reprendre tous les défauts angulaires du plateau destiné à être fixé sur le ou les blocs de guidage.

Avantageusement, le dispositif comporte au moins une pièce d'interface prise en sandwich entre la structure de fixation et les moyens de compensation. Plus particulièrement la pièce d'interface est accueillie dans un logement ménagé sur une face de la structure de fixation et est prise en sandwich entre ce logement et les moyens de compensation. En particulier la pièce d'interface repose sur la surface convexe d'au moins un élément tronconique, la pièce étant apte à faciliter le pivotement, notamment la pièce est une bague à roulement à billes, les billes étant en contact avec la surface sphérique/convexe de l'élément, ou une pièce possédant un revêtement antifriction ou à faible coefficient de friction du type PTFE (polytétrafluoroéthylène).

La pièce comporte sur l'une de ses faces un logement pour accueillir les moyens de compensation et sur sa face opposée une cavité logeant l'élément à fonction élastique.

Avantageusement, les moyens de compensation sont associés à une pièce démontable de la structure de fixation, en particulier l'accès pour démonter cette pièce étant dans un plan latéral par rapport au plan de fixation du plateau.

Plus particulièrement, selon un mode de réalisation, le bloc de guidage (sa structure de fixation) comporte une pièce centrale d'appui (qui repose/s'appuie sur les moyens de compensation) et deux platines latérales de fixation (ou flasques latéraux) rendues solidaires de manière amovible (par des moyens amovibles d'attache) respectivement des deux faces latérales de la pièce centrale d'appui (faces perpendiculaires au plan destiné à être en regard du plateau). Les platines de fixation sont les seules pièces qui sont destinées à être solidaires, en particulier par vissage, du plateau destiné à être monté sur le bloc de guidage, la pièce centrale n'étant pas destinée à être fixée au plateau. En particulier, la pièce centrale est au niveau de sa face destinée à être en regard du plateau légèrement en retrait par rapport aux faces de fixation des deux platines de fixation de manière à ménager un jeu entre ladite pièce centrale et le plateau, de sorte à pouvoir, après démontage des moyens amovibles d'attache, retirer la pièce centrale et donc les moyens de compensation tandis que le plateau généralement portant une charge peut rester en place.

Ainsi, la désolidarisation de la pièce centrale portant les moyens de compensation se fait de manière très accessible, latéralement audit bloc de guidage, permettant aisément la maintenance des moyens de compensation, alors que la charge peut rester sur le chariot porteur sans avoir à être démontée. Si besoin, une vis additionnelle peut être insérée dans le plateau et venir en appui sur la structure porteuse de fixation, permettant le remplacement de la pièce centrale du bloc de guidage comprenant les moyens de compensation, sans risque d'affaissement du chariot.

De préférence, la pièce centrale du bloc de guidage est conçue (en position d'utilisation du bloc de guidage) pour être soit fixe par rapport aux platines de fixation avec éventuellement un jeu latéral fixe avec l'une et/ou l'autre des platines grâce à des moyens de bridage, soit apte à être mobile en translation latérale par rapport aux platines de fixation (tout en gardant la liaison avec les platines via les moyens d'attache), la mobilité étant libre sans moyen d'interface ou réglable selon un réglage d'intensité variable via des moyens élastiques d'interface du type à ressort. Par conséquent, le bloc de support et guidage peut comporter en outre des moyens (de guidage en translation) autorisant au moins un degré de liberté en translation dite latérale, selon une direction perpendiculaire à la hauteur du bloc (c'est-à-dire perpendiculaire à la direction allant de la surface de fixation du plateau vers le patin), c'est-à-dire selon une direction destinée à être perpendiculaire au sens de déplacement du patin de guidage; la translation latérale étant verrouillable ou non, en particulier en fonction du nombre de patins et de leur position qui seront destinés à être utilisés pour un ensemble mobile tel qu'un chariot. Avec le même bloc de guidage, il est ainsi possible d'adapter aisément le besoin ou non de mobilité de la pièce centrale. La mobilité permet notamment de procurer un jeu latéral (direction parallèle aux rails) entre au moins une platine de fixation et la pièce centrale, et ainsi de compenser un défaut de parallélisme de deux rails sur lesquels circuleraient deux blocs de support et guidage respectifs de l'invention. La mobilité latérale permet d'éviter tout effort et par conséquent toute usure liée à des défauts de parallélisme des rails. Pour un ensemble comprenant plusieurs blocs de support et guidage de l'invention, il sera possible d'agencer certains blocs de guidage avec une pièce centrale fixe et d'autres présentant leur pièce centrale mobile.

Les moyens de compensation sont agencés tels que l'élément à surface sphérique comporte un axe médian de fixation (et de symétrie) qui selon le mode de réalisation est de direction perpendiculaire ou parallèle au plan de mouvement du patin de guidage.

Le plan de mouvement correspond au plan dans lequel se mue le bloc de guidage via son patin en position montée sur un rail.

Dans un mode de réalisation, les moyens de compensation sont donc agencés tels que l'élément à surface sphérique comporte un axe médian de fixation (et de symétrie) de direction perpendiculaire au plan de mouvement du patin de guidage.

Dans un autre mode de réalisation, les moyens de compensation sont agencés tels que l'élément à surface sphérique comporte un axe médian de fixation (et de symétrie) de direction parallèle au plan de mouvement du patin de guidage.

Dans ce dernier mode de réalisation, le bloc de support et guidage comporte par exemple trois éléments à surface sphérique (deux éléments d'extrémité et un élément médian) d'axe de symétrie parallèle au plan de mouvement du patin de guidage, qui sont équidistants, les éléments à surface sphérique dits d'extrémité présentant leur axe de symétrie coplanaire tandis que l'axe de symétrie de l'élément médian étant agencé dans un plan inférieur en hauteur par rapport au plan contenant les deux autres axes de symétrie.

Avantageusement, le dispositif de support et guidage comporte une motorisation pour sa mobilité, en particulier la motorisation peut être associée à un bloc de support et guidage.

Lorsque la motorisation n'est pas directement associée à un bloc de guidage, le bloc de guidage situé à proximité de la motorisation est de préférence tel que la pièce centrale dudit bloc est mobile en translation selon un certain jeu en réglant les moyens élastiques d'interface du type à ressort (tarage du ressort par vissage d'un écrou), ce qui permet de régler l'entredent entre le pignon d'entraînement et la crémaillère (dans le cadre d'un entraînement par pignon/crémaillère), d'assurer une protection contre les éventuelles surcharges de couples transmises dans le pignon/crémaillère puisqu'au-delà de l'effort de tarage, le pignon va pouvoir s'éloigner de la crémaillère, et/ou également constitue un moyen de corriger l'orientation de la charge par rapport à un référentiel fixe lié au châssis support de rail. De préférence, le bloc de guidage qui en revanche sera à l'opposé (le plus éloigné) de la motorisation sera tel que sa pièce centrale sera bridée en translation en ayant ajusté le jeu éventuel séparant la pièce centrale des platines latérales de fixation, ce qui permet d'ajuster l'alignement angulaire entre le chariot et un référentiel fixe.

Selon le poids de la charge à supporter, le dispositif peut comporter plusieurs blocs de support et guidage, notamment agencés en position d'utilisation selon au moins une paire de deux blocs en regard (écartés de la distance de deux rails parallèles), en particulier selon deux paires de deux blocs en regard.

Le nombre de patins et de blocs de guidage peut être infini, le nombre n'ajoutant aucune contrainte géométrique.

L'invention est également relative à un ensemble (formant en particulier un chariot apte à être mobile) comportant au moins un dispositif de support et guidage de l'invention et un ou plusieurs plateaux fixés sur ledit dispositif, tels que par exemple deux plateaux fixés respectivement sur deux paires de deux blocs de support et guidage en regard.

La fixation d'un plateau est réalisée par-dessus un bloc de support et guidage, en particulier sur le dessus d'une au moins platine de fixation.

Enfin, l'invention est relative à une installation pour le support et la mobilité d'au moins un chariot ou une charge telle qu'un robot, comportant au moins un dispositif de support et guidage de l'invention ou ensemble précité, et au moins un rail de guidage pour le déplacement du dispositif le long du rail.

Pour faciliter la description qui suit, la mobilité d'un chariot fixé sur un dispositif se fait sur au moins un rail disposé horizontalement. Ainsi, dans la suite de la description, les termes « horizontal », « vertical », « supérieur », « inférieur », « haut », « bas », s'entendent dans le cadre d'une installation du dispositif par rapport à un plan horizontal sur lequel peut circuler le chariot fixé sur ledit dispositif. Néanmoins, l'invention est destinée au support et au guidage et à la mobilité d'un ensemble du type chariot quelle que soit la direction de déplacement du chariot (dans tous les plans de l'espace).

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective éclatée d'un dispositif de support et guidage de l'invention comprenant un bloc de support et guidage selon un premier exemple de réalisation pour ;
- La figure 2 est une vue en coupe longitudinale du bloc de support et guidage de la figure 1 sur lequel est monté un plateau porteur de charge ;
- La figure 3 représente une vue en perspective éclatée d'un dispositif de support et guidage de l'invention comprenant un bloc de support et guidage selon un second exemple de réalisation ;
- La figure 4 est une vue de dessus du bloc de support et guidage assemblé de la figure 3 ;
- La figure 5 est une vue en coupe longitudinale médiane du bloc des figures 3 et 4 ;
- La figure 6 est une vue en coupe verticale et transversale à l'axe longitudinal du bloc des figures 3 et 4, et passant par l'axe de fixation d'un élément de compensation d'extrémité du bloc;
- La figure 7 est une vue de dessous du dispositif comportant deux paires de blocs de support et guidage de la figure 3, et porteur d'une charge ;
- La figure 8 illustre une vue schématique de dessus d'une installation comportant un dispositif de support et guidage de l'invention qui comprend deux paires en regard de blocs de guidage et support de la figure 3, et une charge apte à se déplacer le long de deux rails parallèles.

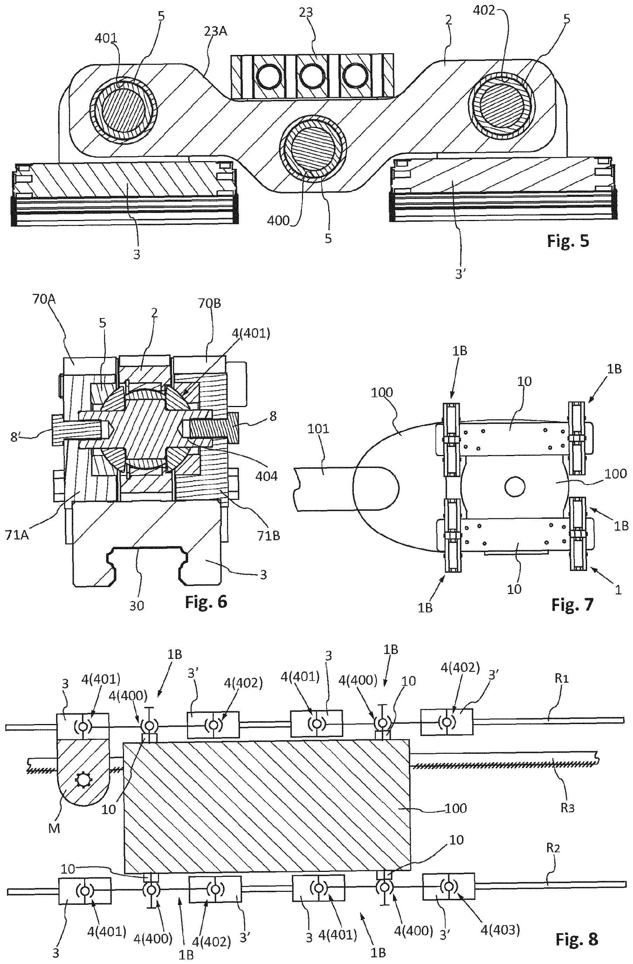

Le dispositif de support et guidage 1 de l'invention illustré sur les figures comporte au moins un bloc de support et guidage 1A ou 1B, destiné à supporter au moins un plateau 10 qui est destiné à porter une charge telle qu'un robot. Le ou les plateaux 10 associés à un ou plusieurs blocs de support et guidage 1A ou 1B, comme illustré sur les figures 7 et 8, forment un ou des chariots porteurs d'une charge 100 et aptes à être mobiles le long de deux rails parallèles R1 et R2 via une motorisation associée à au moins un bloc de support et guidage.

En variante, la motorisation, peut tout aussi bien être associée directement en liaison rigide avec la charge 100, le bloc de guidage 1B le plus proche agissant comme moyen de réglage de l'entredent pignon/crémaillère (réglage du jeu de fonctionnement) et ou d'orientation de la charge.

Selon la charge à supporter, le dispositif de support et guidage 1 de l'invention pourra comporter plusieurs blocs de support et guidage 1A ou 1B, et un ou plusieurs plateaux 10.

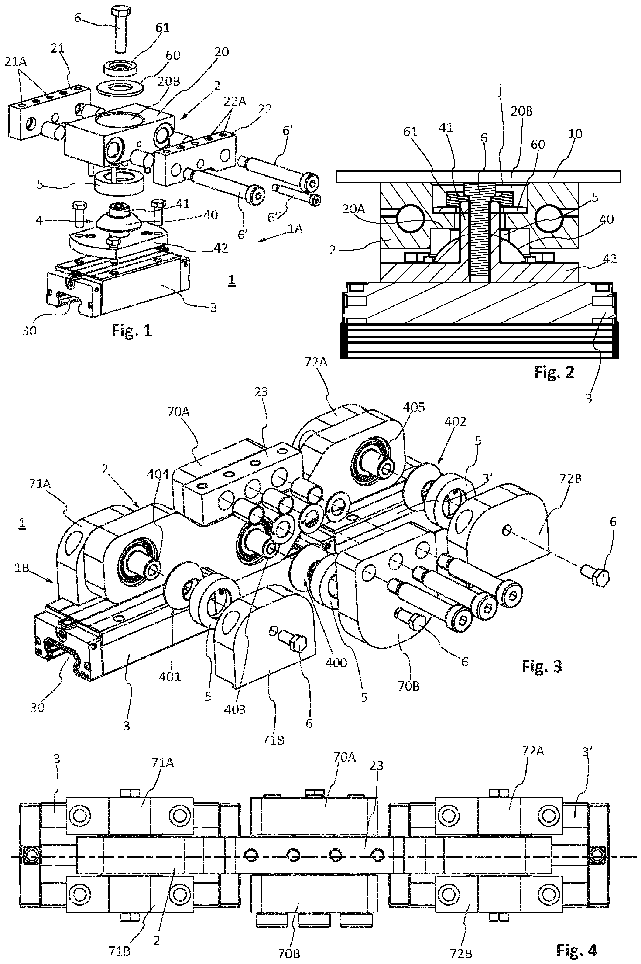

Selon la charge à supporter et/ou l'utilisation, le dispositif de support et guidage 1 de l'invention, pourra être configuré selon un premier exemple de réalisation de bloc de support et guidage 1A illustré sur les figures 1 et 2, ou selon un second exemple de réalisation de bloc de support et guidage 1B illustré sur les figures 3 à 7.

De manière commune aux deux exemples de réalisation d'un bloc de support et guidage du dispositif de support et guidage de l'invention, chaque bloc 1A, 1B, comporte au moins une structure de fixation 2 destinée à la fixation d'au moins un plateau 10, au moins un patin de guidage 3, 3' destiné au guidage du dispositif sur un rail et comprenant des moyens de guidage 30 du type glissière sur la face inférieure, et des moyens dits de compensation 4, autorisant selon l'invention au moins un degré de liberté en pivotement de la platine de fixation 2, lesdits moyens de compensation 4 étant agencés pour soutenir la structure de fixation 2 qui est apte à pivoter sur la surface desdits moyens de compensation de sorte à compenser des jeux en hauteur et d'inclinaison angulaire par rapport à l'horizontal, en position d'utilisation du dispositif lorsqu'il porte une charge lourde du type robot tout en étant mobile.

Les moyens de compensation 4 présentent au moins un élément de forme tronconique à surface sphérique/convexe 40, ou 400 à 402, équivalent à une rotule et porté par un axe de fixation 41, ou respectivement 403 à 405.

La structure de fixation 2 est associée aux moyens de compensation 4 en reposant sur la surface convexe de l'élément 40, via de préférence une pièce d'interface 5 apte à faciliter le pivotement de la structure de fixation 2. La pièce d'interface 5 est par exemple une bague à roulement à billes, les billes étant en contact avec la surface sphérique/convexe de l'élément. Le contact peut également se faire sans pièce d'interface à fonction roulante mais avec une pièce d'interface doté d'un revêtement antifriction ou à bas coefficient du type PTFE permettant un fonctionnement à sec (sans lubrification) et sans entretien.

La bague d'interface 5 est maintenue entre la structure de fixation 2 et l'élément de compensation 40, par un axe 41 qui est creux et porte en extérieur l'élément de compensation 40.

Dans l'exemple illustré sur les figures 1 et 2, le dispositif de support et de guidage comporte le bloc de support et de guidage 1A qui est doté d'un seul élément de compensation 40 à surface convexe, ledit élément possédant un axe de symétrie et de fixation (formé par l'axe 41) qui est vertical.

L'élément 40 à surface convexe est placé en interface entre la structure de fixation 2 et le patin 3.

L'axe 41 est solidaire d'une platine 42 qui est rapportée en étant fixée contre la surface supérieure du patin 3.

La structure de fixation 2 repose sur les moyens de compensation 4 (la bague d'interface 5 et l'élément tronconique 40) en étant fixée à la platine 42 portant l'axe 41, via une vis de fixation 6 qui traverse ladite structure de fixation et coopère avec l'intérieur creux de l'axe 41.

La structure de fixation 2 comporte une pièce centrale d'appui 20 et deux platines de fixation 21 et 22 (sous forme de flasques) rendues solidaires des deux côtés verticaux 20' et 20" (faces latérales) respectifs de la pièce centrale d'appui 20.

Les deux platines de fixation 21, 22 sont rendues solidaires de manière amovible respectivement des deux faces latérales 20', 20" de la pièce centrale, par des moyens amovibles d'attache 6'.

La pièce centrale 20 repose sur les moyens de compensation 4.

Les deux platines de fixation 21 et 22 sont dotées sur leur face supérieure d'orifices de fixation 21A et 22A (figure 1) destinés à la fixation du plateau 10 (figure 2) sur lequel sera fixée la charge telle qu'un robot.

La pièce centrale est au niveau de sa face supérieure destinée à être en regard du plateau, légèrement en retrait par rapport aux faces de fixation des deux platines 21 et 22 de manière à ménager un jeu j (figure 2), par exemple de l'ordre du millimètre, entre ladite pièce centrale 20 et le plateau 10, de sorte à pouvoir, après démontage des moyens amovibles d'attache 6', retirer la pièce centrale 20 et donc les moyens de compensation tandis que le plateau 10 portant la charge peut rester en place.

En regard des figures 1 et 2, la pièce centrale d'appui 20 possède un logement intérieur 20A en partie inférieure qui accueille la pièce d'interface 5.

En outre, la pièce centrale d'appui 20 comporte une cavité/un alésage traversant 20B traversé par la vis de fixation 6 et logeant (via un épaulement de la cavité) des rondelles de pré-charge 60 et 61 prises en sandwich entre la tête de la vis de fixation 6 et l'épaulement de l'alésage 20B. Au moins l'une des rondelles 60 est à fonction élastique, il s'agit par exemple d'une rondelle à ressort ou d'une rondelle en élastomère. En cas de défaut de planéité du plan sur lequel sont les rails, au moins un rail est alors localement affaissé engendrant en cet endroit un affaissement du patin ; les efforts de traction exercés par le patin portent alors sur la vis 6 et les rondelles 60 et 61 dont celle élastique 60, et l'élasticité de la rondelle 60 procure une désolidarisation de la structure de fixation 2 (de la pièce 20 de la structure de fixation) par rapport à la pièce d'interface 5 et l'élément tronconique 40, ce qui permet de préserver les moyens de compensation 4 et surtout le patin qui s'usera bien moins vite au passage de l'affaissement localisé du rail.

Dans cet exemple de réalisation, la pièce centrale d'appui 20 du bloc 1A est apte à s'appuyer sur l'ensemble de la périphérie de l'élément tronconique 40.

De préférence, la pièce centrale 20 du bloc de guidage est conçue (en position d'utilisation du bloc de guidage) pour être soit fixe par rapport aux platines de fixation 21 et 22 avec éventuellement un jeu latéral fixe avec l'une et/ou l'autre des platines grâce à des moyens de bridage tel que la vis 6" (figure 1), soit apte à être mobile en translation latérale par rapport aux platines de fixation (tout en gardant la liaison avec les platines via les moyens d'attache 6'), la mobilité étant libre sans moyen d'interface (la vis de bridage 6" n'est pas présente) ou bien réglable selon un réglage (une plage de déplacement) d'intensité variable via des moyens élastiques d'interface du type à ressort ici non illustrés (le ressort sera associé par exemple à une vis à écrou traversante comme la vis 6", le vissage de l'écrou permettant de tarer le ressort et par conséquent d'assurer le réglage variable). Avec le même bloc de guidage, il est ainsi possible d'adapter aisément le besoin ou non de mobilité de la pièce centrale. La mobilité permet notamment de compenser un défaut de parallélisme de deux rails sur lesquels circuleraient deux blocs de support et guidage respectifs de l'invention. Pour un ensemble comprenant plusieurs blocs de support et guidage de l'invention, il sera possible d'agencer certains blocs de guidage avec une pièce centrale fixe et d'autres présentant leur pièce centrale mobile.

Dans le second exemple de réalisation de l'invention au regard du bloc de support et guidage 1B illustré sur les figures 3 à 6, la structure de fixation 2 dudit bloc de support et guidage 1B présente une forme longitudinale dont l'axe longitudinal est parallèle à la glissière 30 de deux patins 3 et 3' destinés à coopérer avec un rail.

La structure de fixation 2 comporte des moyens de fixation 23 tels qu'une platine de fixation, destinés à la fixation d'un plateau adapté à porter une charge telle qu'un robot.

La structure de fixation 2 présente sur sa partie supérieure (figures 3 et 5) un décrochement pour ménager une cavité 23A dans laquelle est logée la platine de fixation 23 adaptée à la fixation d'un plateau 10 visible sur la figure 7.

La figure 7 illustre un dispositif de support et guidage en vue de dessous comprenant deux paires de blocs de support et guidage 1B de la figure 3, chaque paire comprenant deux blocs parallèles et en regard, reliés entre eux par un plateau 10 fixé sur les platines de fixation respectives des blocs. Chaque ensemble d'une paire de blocs de support et guidage et d'un plateau, forme un chariot. Ici, deux chariots sont prévus pour porter à eux deux une charge 100 telle qu'un robot avec son bras manipulateur 101 déporté.

La figure 8 montre une vue schématique d'une installation comportant les deux rails R1 et R2 sur lesquels sont montés les chariots et la charge de la figure 7. Un moteur M est associé à l'un des chariots, plus particulièrement à l'un des blocs de support et guidage 1B, pour la mobilité des chariots et donc de la charge 100. Le moteur M coopère par exemple de manière connue par transmission pignon-crémaillère avec un chemin à crémaillère R3.

La structure de fixation 2 de ce second exemple de réalisation comporte trois éléments de compensation 400, 401 et 402 portés par des axes de fixation et de symétrie respectifs 403 à 405 qui sont ici horizontaux.

Les éléments de compensation 400, 401 et 402 sont équidistants selon l'axe longitudinal de la structure de fixation 2. Les deux éléments de compensation d'extrémité 401 et 402 possèdent leurs axes respectifs de fixation 404 et 405 qui sont coplanaires, dans un même plan horizontal, tandis que l'élément médian 400 possède son axe 403 à une hauteur inférieure à celle des deux autres axes.

Chaque élément de compensation 400, 401, 402 est de forme tronconique avec une génératrice à surface convexe.

De préférence, chaque élément de compensation 400, 401, 402 est associé à une pièce d'interface 5 procurant une facilité de pivotement/basculement pour la structure de fixation 2, qui est formée par une bague à roulements à billes.

Pour la fixation des éléments de compensation 400, 401, 402 et des pièces d'interface 5, le bloc de support et guidage 1B comporte trois paires de flasques de maintien 70A, 70B, 71A, 71B et 72A, 72B prenant en sandwich la structure de fixation 2 et respectivement les trois éléments de compensation et pièces d'interface, ainsi que des moyens de fixation amovibles tels que des vis de serrage 8 et 8' coopérant avec les flasques et la structure 2. Les moyens de fixation 8 et 8' sont agencés dans des plans horizontaux, et sont accessibles extérieurement au bloc de support et guidage et latéralement audit bloc (c'est-à-dire dans des plans verticaux perpendiculaires aux faces inférieure et supérieure du bloc).

Ce second exemple de réalisation présente l'avantage de disposer les éléments de compensation 4 latéralement aux blocs de support et guidage et donc latéralement aux chariots lorsqu'ils portent la charge 100. Ainsi, pour une maintenance, il n'est pas nécessaire de démonter la charge 100, l'opérateur ayant directement accès depuis les côtés aux moyens de compensation 4 et aux bagues de roulements à billes 5.

## Revendications

1. Dispositif de support et guidage (1) comportant au moins un bloc de support et guidage (1A; 1B) qui comprend une structure de fixation (2) destinée à la fixation d'un plateau (10) et au moins un patin de guidage (3) solidaire de la structure de fixation (2), le bloc de support et guidage (1A ; 1B) comportant des moyens (4) dits de compensation autorisant au moins un degré de liberté en pivotement de la structure de fixation (2), **caractérisé en ce que** le bloc de support comporte au moins un élément à fonction élastique (60) qui est agencé en reposant contre une surface de la structure de fixation en étant indépendant et séparé des moyens de compensation (4) par le corps de ladite structure de fixation, et en étant tourné vers le plateau qui est destiné à être fixé sur ladite structure de fixation.

2. Dispositif selon la revendication 1, **caractérisé en ce que** ledit au moins un élément à fonction élastique (60) est une rondelle à ressort ou est en élastomère.

3. Dispositif selon l'une quelconque des revendications précédentes , **caractérisé en ce que** les moyens de compensation (4) sont associés à une pièce (20) qui est démontable de la structure de fixation (2), en particulier l'accès pour démonter cette pièce étant dans un plan latéral par rapport au plan de fixation du plateau.

4. Dispositif selon la revendication précédente, **caractérisé en ce que** la pièce démontable (20) comporte sur l'une de ses faces un logement (20A) pour accueillir les moyens de compensation (4) et sur sa face opposée une cavité (20B) logeant un élément à fonction élastique (60).

5. Dispositif selon l'une quelconque des revendications précédentes, **caractérisé en ce que** les moyens de compensation (4) comportent au moins un élément (40; 400, 401, 402) à surface sphérique, en particulier au moins un élément tronconique (40 ; 400, 401, 402) dont la génératrice est à surface convexe.

6. Dispositif selon l'une quelconque des revendications précédentes, **caractérisé en ce que** les moyens de compensation (4) ont une fonction de rotule.

7. Dispositif selon l'une quelconque des revendications précédentes, **caractérisé en ce que** le bloc de support et guidage (1A ; 1B) comporte au moins une pièce d'interface (5) prise en sandwich entre la structure de fixation (2) et les moyens de compensation (4), en particulier la pièce d'interface (5) reposant sur la surface convexe d'au moins un élément tronconique (40, 40', 40"), notamment la pièce d'interface (5) est une bague à roulement à billes, les billes étant en contact avec la surface convexe de l'élément, ou une pièce possédant un revêtement antifriction ou à faible coefficient de friction du type PTFE.

8. Dispositif selon l'une quelconque des revendications précédentes **caractérisé en ce que** le bloc de support et guidage (1B) comporte trois éléments à surface sphérique (400, 401 402) d'axe de symétrie parallèle au plan de mouvement du patin de guidage, qui sont équidistants, lesdits éléments à surface sphérique dits d'extrémité (401, 402) présentant leur axe de symétrie coplanaire, l'axe de symétrie de l'élément médian (400) étant agencé dans un plan inférieur en hauteur par rapport au plan contenant les deux autres axes de symétrie.

9. Dispositif selon l'une quelconque des revendications 1 à 7, **caractérisé en ce que** le bloc de guidage (1A) comporte une pièce centrale (20) qui repose sur les moyens de compensation (4), et deux platines de fixation (21, 22) rendues solidaires de manière amovible respectivement des deux faces latérales (20', 20") de la pièce centrale, par des moyens amovibles d'attache (6'), les platines de fixation étant les seules pièces qui sont destinées à être solidaires, en particulier par vissage, du plateau destiné à être monté sur le bloc de guidage.

10. Dispositif selon la revendication précédente, **caractérisé en ce que** la pièce centrale (20) est conçue pour être soit fixe par rapport aux platines de fixation (21, 22) avec éventuellement un jeu latéral fixe avec l'une et/ou l'autre des platines grâce à des moyens de bridage (6"), soit apte à être mobile en translation latérale par rapport aux platines de fixation, la mobilité étant libre sans moyen d'interface ou réglable selon un réglage d'intensité variable via des moyens élastiques d'interface du type à ressort.

11. Dispositif selon la revendication 9 ou 10, **caractérisé en ce que** la pièce centrale (20) est, au niveau de sa face destinée à être en regard du plateau, légèrement en retrait par rapport aux faces de fixation des deux platines de fixation (21, 22) de manière à ménager un jeu (j) entre ladite pièce centrale et le plateau.

12. Dispositif selon l'une quelconque des revendications précédentes, **caractérisé en ce qu'**il comporte une motorisation pour sa mobilité, en particulier la motorisation pouvant être associée à un bloc de support et guidage.

13. Dispositif selon l'une quelconque des revendications précédentes, **caractérisé en ce qu'**il comporte plusieurs blocs de support et guidage (1B), notamment agencés en position d'utilisation selon au moins une paire de deux blocs en regard, en particulier selon deux paires de deux blocs en regard.

14. Ensemble, tel qu'un chariot, comportant au moins un dispositif de support et guidage (1) selon l'une quelconque des revendications précédentes et un ou plusieurs plateaux (10) fixés sur ledit dispositif, tels que deux plateaux fixés respectivement sur deux paires de deux blocs de support et guidage (1B) en regard.

15. Installation pour le support et la mobilité d'au moins un chariot ou une charge telle qu'un robot, comportant au moins un dispositif de support et guidage (1) selon l'une quelconque des revendications 1 à 13 ou un ensemble selon la revendication précédente, et au moins un rail de guidage (R1, R2) pour le déplacement du dispositif le long du rail.

## Patentansprüche

1. Trag- und Führungsvorrichtung (1) mit mindestens einem Trag- und Führungsblock (1A; 1B), der eine Befestigungsstruktur (2) zum Befestigen einer Platte (10) und mindestens einen mit der Befestigungsstruktur (2) fest verbundenen Führungsschuh (3) umfasst, wobei der Trag- und Führungsblock (1A; 1B) sogenannte Kompensationsmittel (4) umfasst, die mindestens einen Freiheitsgrad beim Schwenken der Befestigungsstruktur (2) ermöglichen, **dadurch gekennzeichnet, dass** der Tragblock mindestens ein Element mit elastischer Funktion (60) umfasst, das so angeordnet ist, dass es an einer Oberfläche der Befestigungsstruktur anliegt, wobei es unabhängig und durch den Körper der Befestigungsstruktur von den Kompensationsmitteln (4) getrennt und der Platte zugewandt ist, die auf der Befestigungsstruktur befestigt werden soll.

2. Vorrichtung nach Anspruch 1, **dadurch gekennzeichnet, dass** das mindestens eine Element mit elastischer Funktion (60) eine Federscheibe ist oder aus Elastomer besteht.

3. Vorrichtung nach einem der vorhergehenden Ansprüche, **dadurch gekennzeichnet, dass** die Kompensationsmittel (4) einem Teil (20) zugeordnet sind, das von der Befestigungsstruktur (2) entfernt werden kann, wobei sich insbesondere der Zugang zum Entfernen dieses Teils in einer seitlichen Ebene in Bezug auf die Ebene zur Befestigung der Platte befindet.

4. Vorrichtung nach dem vorhergehenden Anspruch, **dadurch gekennzeichnet, dass** der entfernbare Teil (20) auf einer seiner Seiten eine Aufnahme (20A) zur Unterbringung der Kompensationsmittel (4) und auf seiner gegenüberliegenden Seite einen Hohlraum (20B) umfasst, der ein Element mit elastischer Funktion (60) aufnimmt.

5. Vorrichtung nach einem der vorhergehenden Ansprüche, **dadurch gekennzeichnet, dass** die Kompensationsmittel (4) mindestens ein Element (40; 400, 401, 402) mit einer sphärischen Oberfläche, insbesondere mindestens ein kegelstumpfartiges Element (40; 400, 401, 402) umfassen, dessen Mantellinie eine konvexe Oberfläche aufweist.

6. Vorrichtung nach einem der vorhergehenden Ansprüche, **dadurch gekennzeichnet, dass** die Kompensationsmittel (4) eine Kugelgelenkfunktion aufweisen.

7. Vorrichtung nach einem der vorhergehenden Ansprüche, **dadurch gekennzeichnet, dass** der Trag- und Führungsblock (1A; 1B) mindestens einen Zwischenteil (5) umfasst, der zwischen der Befestigungsstruktur (2) und den Kompensationsmitteln (4) sandwichartig eingefasst ist, wobei insbesondere das Zwischenteil (5) auf der konvexen Oberfläche mindestens eines kegelstumpfförmigen Elements (40, 40 ', 40") aufliegt, wobei insbesondere das Zwischenteil (5) ein Kugellagerring ist, wobei die Kugeln die konvexe Oberfläche des Elements berühren, oder ein Teil mit einer Gleitbeschichtung oder einem niedrigen Reibungskoeffizienten vom Typ PTFE ist.

8. Vorrichtung nach einem der vorhergehenden Ansprüche, **dadurch gekennzeichnet, dass** der Trag- und Führungsblock (1B) drei Elemente mit einer sphärischen Oberfläche (400, 401, 402) mit einer Symmetrieachse parallel zur Bewegungsebene des Führungsschuhs umfasst, die äquidistant sind, wobei die Symmetrieachsen der als Endelemente (401, 402) bezeichneten kugelförmigen Flächenelemente koplanar sind und die Symmetrieachse des medianen Elements (400) in einer Ebene angeordnet ist, die in der Höhe niedriger ist als die Ebene, die die beiden anderen Symmetrieachsen enthält.

9. Vorrichtung nach einem der Ansprüche 1 bis 7, **dadurch gekennzeichnet, dass** der Führungsblock (1A) einen Mittelteil (20), der auf den Kompensationsmitteln (4) aufliegt, und zwei Befestigungsleisten (21, 22) umfasst, die durch abnehmbare Anbringungsmittel (6') abnehmbar mit den beiden seitlichen Seiten (20', 20") des Mittelteils fest verbunden sind, wobei die Befestigungsleisten die einzigen Teile sind, die dazu bestimmt sind, mit der Platte, die auf dem Führungsblock montiert werden soll, fest verbunden zu werden, insbesondere durch Verschraubung.

10. Vorrichtung nach dem vorhergehenden Anspruch, **dadurch gekennzeichnet, dass** der Mittelteil (20) so ausgebildet ist, dass er entweder in Bezug auf die Befestigungsleisten (21, 22) gegebenenfalls mit einem festen seitlichen Spiel mit der einen und/oder der anderen Leiste mittels Klemmmitteln (6") befestigt ist, oder in seitlicher Verschiebung in Bezug auf die Befestigungsleisten beweglich sein kann, wobei die Beweglichkeit ohne Zwischenmittel frei ist oder nach einer variablen Intensitätseinstellung über elastische Zwischenmittel vom Typ Feder einstellbar ist.

11. Vorrichtung nach Anspruch 9 oder 10, **dadurch gekennzeichnet, dass** der Mittelteil (20) auf der Höhe seiner Seite, die dazu bestimmt ist, der Platte gegenüber zu liegen, gegenüber den Befestigungsseiten der beiden Befestigungsleisten (21, 22) leicht zurückgesetzt ist, so dass ein Spiel (j) zwischen dem Mittelteil und der Platte entsteht.

12. Vorrichtung nach einem der vorhergehenden Ansprüche, **dadurch gekennzeichnet, dass** sie eine Motorisierung für ihre Beweglichkeit umfasst, wobei insbesondere die Motorisierung einem Trag- und Führungsblock zugeordnet werden kann.

13. Vorrichtung nach einem der vorhergehenden Ansprüche, **dadurch gekennzeichnet, dass** sie mehrere Trag- und Führungsblöcke (1B) umfasst, die insbesondere in der Verwendungsposition nach mindestens einem Paar von zwei gegenüberliegenden Blöcken, insbesondere nach zwei Paaren von gegenüberliegenden Blöcken angeordnet sind.

14. Baugruppe, wie beispielsweise ein Wagen, umfassend mindestens eine Trag- und Führungsvorrichtung (1) nach einem der vorhergehenden Ansprüche und eine oder mehrere Platten (10), die an der Vorrichtung befestigt sind, wie beispielsweise zwei Platten, die jeweils an zwei Paaren von zwei gegenüberliegenden Trag- und Führungsblöcken (1B) befestigt sind.

15. Installation zum Tragen und zur Beweglichkeit von mindestens einem Wagen oder einer Last wie einem Roboter, umfassend mindestens eine Trag- und Führungsvorrichtung (1) nach einem der Ansprüche 1 bis 13 oder eine Baugruppe nach dem vorhergehenden Anspruch und mindestens eine Führungsschiene (R1, R2) zum Verschieben der Vorrichtung entlang der Schiene.

## Claims

1. Support-and-guide device (1) comprising at least one support-and-guide block (1A; 1B) which comprises an attachment structure (2) which is intended for attaching a plate (10) and at least one guide pad (3) which is secured to the attachment structure (2), the support-and-guide block (1A; 1B) comprising so-called compensation means (4) which allow at least a degree of freedom in pivoting the attachment structure (2), **characterized in that** the support block comprises at least one resilient-function element (60) which is arranged so as to rest against a surface of the attachment structure while being independent and separated from the compensation means (4) by the body of said attachment structure, and being turned toward the plate which is intended to be attached to said attachment structure.

2. Device according to claim 1, **characterized in that** said at least one resilient-function element (60) is a spring washer or is made of elastomer.

3. Device according to either of the preceding claims, **characterized in that** the compensation means (4) are associated with a part (20) which can be removed from the attachment structure (2), in particular the access point for removing this part being in a lateral plane relative to the plate-attachment plane.

4. Device according to the preceding claim, **characterized in that** the removable part (20) comprises, on one of the surfaces thereof, a housing (20A) to accommodate the compensation means (4) and, on the opposite surface thereof, a cavity (20B) housing a resilient-function element (60).

5. Device according to any of the preceding claims, **characterized in that** the compensation means (4) comprise at least one element (40; 400, 401, 402) having a spherical surface, in particular at least one frustoconical element (40; 400, 401, 402) of which the generatrix has a convex surface.

6. Device according to any of the preceding claims, **characterized in that** the compensation means (4) have a pivot function.

7. Device according to any of the preceding claims, **characterized in that** the support-and-guide block (1A; 1B) comprises at least one interface part (5) sandwiched between the attachment structure (2) and the compensation means (4), in particular the interface part (5) resting on the convex surface of the at least one frustoconical element (40, 40', 40"), specifically the interface part (5) is a ball bearing ring, the balls being in contact with the convex surface of the element, or a PTFE part having an anti-friction coating or a low coefficient of friction.

8. Device according to any of the preceding claims, **characterized in that** the support-and-guide block (1B) comprises three elements having a spherical surface (400, 401, 402) and having an axis of symmetry parallel to the plane of movement of the guide pad, which are equidistant, said so-called end spherical-surface elements (401, 402) having their coplanar axis of symmetry, the axis of symmetry of the central element (400) being arranged in a lower plane in height relative to the plane containing the other two axes of symmetry.

9. Device according to any of claims 1 to 7, **characterized in that** the guide block (1A) comprises a central part (20) which rests on the compensation means (4), and two attachment plates (21, 22) which are releasably secured to the two side faces (20', 20"), respectively, of the central part by releasable attachment means (6'), the attachment plates being the only parts intended to be secured, in particular by screwing, to the plate intended to be mounted on the guide block.

10. Device according to the preceding claim, **characterized in that** the central part (20) is designed to be either attached relative to the attachment plates (21, 22), optionally having a set lateral clearance with one and/or the other of the plates owing to clamping means (6"), or to be movable in lateral translation relative to the attachment plates, the mobility being free without interface means or adjustable according to a variable intensity setting by means of spring-type interface resilient means.

11. Device according to either claim 9 or claim 10, **characterized in that** the central part (20) is, on the surface thereof intended to be opposite the plate, slightly set back relative to the attachment faces of the two attachment plates (21, 22) so as to provide a clearance (j) between said central part and the plate.

12. Device according to any of the preceding claims, **characterized in that** it comprises a drive so as to be movable, in particular it being possible for the drive to be associated with a support-and-guide block.

13. Device according to any of the preceding claims, **characterized in that** it comprises a plurality of support-and-guide blocks (1B), specifically arranged in a use position according to at least one pair of two opposing blocks, in particular according to two pairs of two opposing blocks.

14. Assembly, such as a carriage, comprising at least one support-and-guide device (1) according to any of the preceding claims and one or more plates (10) attached to said device, such as two plates attached to two pairs of two opposing support-and-guide blocks (1B), respectively.

15. Installation for the support and mobility of at least one carriage or a load such as a robot, comprising at least one support-and-guide device (1) according to any of claims 1 to 13 or an assembly according to the preceding claim, and at least one guide rail (R1, R2) for moving the device along the rail.
